# EUROPÄISCHE PATENTANMELDUNG

(11) **EP 0 679 815 A2**
(43) Veröffentlichungstag der Anmeldung: **02.11.1995**
(21) Anmeldenummer: 95105350.3
(22) Anmeldetag: 08.04.1995
(51) Int. Cl.: F16C 3/02

(54) **Gelenkwelle für Kraftfahrzeuge**

(30) Priorität: 27.04.1994 DE 4414710
(71) Anmelder: VAW Aluminium AG, D-30453 Hannover (DE)
(72) Erfinder: Schoch, Heinz, Dr., D-29336 Nienhagen (DE); Schulze, Thorsten, D-31515 Wunstorf (DE); Böttger, Klaus-Georg, D-30952 Ronnenberg (DE); Westhof, Jürgen, Dr., D-27367 Ahausen (DE)
(74) Vertreter: Thömen, Uwe, Dipl.-Ing.

(57) **Zusammenfassung**

Gelenkwelle für Kraftfahrzeuge, wobei die Gelenkwelle als Rohr ausgebildet ist und aus Aluminium besteht. Die Gelenkwelle ist durch ein längsnahtgeschweißtes Rohr gebildet, welches aus eine naturharten Aluminiumlegierung besteht. Das Rohr ist ohne Zusatzwerkstoffe längsnahtgeschweißt und die Wandstärke des Rohres ist größer als 2 mm.

## Beschreibung

Die Erfindung betrifft eine Gelenkwelle für Kraftfahrzeuge gemäß dem Oberbegriff des Patentanspruchs 1.

Als Gelenkwellen für Kraftfahrzeuge werden üblicherweise Rohre eingesetzt, und es ist bekannt, diese Rohre sowohl aus Stahl als auch aus Aluminium herzustellen. Sofern Stahlrohre zum Einsatz kommen, sind diese längsnahtgeschweißt.

Zwar lassen sich mit längsnahtgeschweißten Stahlrohren die an eine Gelenkwelle zu stellenden Anforderungen insbesondere hinsichtlich ihrer dynamischen Eigenschaften zufriedenstellend erfüllen, nachteilig ist allerdings, daß die Stahlrohre im Vergleich zu Rohren aus Aluminium ein relativ großes Gewicht besitzen. Man ist deshalb bestrebt, Rohre aus Aluminium zu verwenden, die wesentlich leichter sind. Die Gewichtsersparnis bei Aluminiumrohren liegt gegenüber Stahlrohren bei immerhin etwa 30 %. Nachdem beim Bau von Kraftfahrzeugen allgemein die Tendenz zur Gewichtseinsparung bei dynamisch belasteten Teilen besteht, weil dann auch die weiteren Bestandteile, beispielsweise die Lager, kostengünstiger ausgelegt und dimensioniert werden können, geht das Bestreben dahin, Aluminium zu verwenden. Dabei kommt noch hinzu, daß weniger Gewicht bei einem Kraftfahrzeug auch einen geringeren Kraftstoffverbrauch ermöglicht.

Die bekannten aus Aluminium bestehenden Gelenkwellen sind durch stranggepreßte Halbzeuge gebildet. Wegen der bei Gelenkwellen generell geforderten Genauigkeit müssen die bekannten Aluminiumrohre für Gelenkwellen gezogen werden, was jedoch mit einem erheblichen Aufwand verbunden ist.

Bekanntlich stehen bei Gelenkwellen unter anderem die dynamischen Eigenschaften im Vordergrund, woraus sich die angesprochene hohe Genauigkeit als Voraussetzung ergibt. Diese Genauigkeit bezieht sich sowohl auf die Einhaltung des Außendurchmessers als auch auf die konstante Wandstärke des Aluminiumrohres. Wegen der hohen Drehzahl bei Gelenkwellen ist es erforderlich, hier ganz enge Toleranzen einzuhalten, um einen sicheren Gleichlauf zu gewährleisten. In Ausnahmefällen kann es sogar erforderlich sein, bei nicht exakt gefertigten Gelenkwellen aus Aluminiumrohren Ausgleichsgewichtsstücke an bestimmten Stellen auf das Rohr zu schweißen, um im Sinne einer Auswuchtung den angestrebten Gleichlauf bzw. die erforderlichen dynamischen Eigenschaften der Gelenkwelle zu gewährleisten. Daneben ist die Herstellung stranggepreßter Aluminiumrohre mit den bei Gelenkwellen geforderten relativ dünnen Wandstärken mit einem hohen fertigungstechnischen Aufwand verbunden.

Somit stehen dem erwünschten Einsatz des Werkstoffes Aluminium bei Gelenkwellen immer noch gravierende Nachteile entgegen, und die bekannten stranggepreßten Aluminiumrohre müssen wegen der angesprochenen Genauigkeit als sehr aufwendig und teuer eingestuft werden.

Neben stranggepreßten Aluminiumrohren sind an sich auch schon längsnahtgeschweißte Rohre aus Aluminiumlegierungen bekannt. In der deutschen Offenlegungsschrift DE 41 42 325 A1 ist ein Verfahren zum Herstellen von Fahrwerksträgern für Fahrzeuge, insbesondere Personenkraftwagen, aus Aluminiumlegierungen beschrieben. Den Ausgangspunkt bildet dabei der Umstand, daß in den Fällen, in denen die bisherigen stranggepreßten Aluminiumrohre zu Fahrwerksteilen von Kraftfahrzeugen verarbeitet werden, eine Vielzahl von Umformungsschritten notwendig ist, zu denen auch das Hydroumformen oder Innenhochdruckumformverfahren zählt. Wie in der genannten Offenlegungsschrift beschrieben ist, haftet den bekannten stranggepreßten Aluminiumrohren der Nachteil an, daß eine Hydroumformung bei vorangegangenen anderen Umformungen nicht möglich ist, da das Umformvermögen des Werkstoffes aufgrund der vorangegangenen Umformungen erschöpft ist. Auch ist es nicht möglich, vor dem Hydroumformen zwischenzuglühen, da der Werkstoff entweder aushärtet oder zu weich ist und somit seine Festigkeit verloren hat.

Um vor diesem Hintergrund gleichwohl ein Ausgangsmaterial zum Herstellen von Fahrwerksträgern aus Aluminiumlegierungen zu finden, mit welchem die notwendigen Umformschritte problemlos durchgeführt werden können, wird in der genannten Offenlegungsschrift DE 41 42 325 A1 ein Verfahren vorgeschlagen, bei welchem als Rohlinge längsnahtgeschweißte Rohre aus einer naturharten oder aushärtbaren Aluminiumlegierung verwendet werden. Demgegenüber befaßt sich die vorliegende Erfindung jedoch nicht mit der Problematik, eine Vielzahl von Umformungsschritten zu ermöglichen sowie ein Zwischenglühen vor dem Hydroumformen vorzusehen.

Der vorliegenden Erfindung liegt die Aufgabe zugrunde, eine Gelenkwelle aus Aluminium für Kraftfahrzeuge zu schaffen, welche sich trotz der wegen der dynamischen Eigenschaften geforderten Genauigkeiten und engen Toleranzen wirtschaftlich und kostengünstig herstellen läßt, um somit den an sich vorteilhaften Werkstoff Aluminium auch bei Gelenkwellen einsetzen zu können.

Die Lösung dieser Aufgabe erfolgt bei der im Oberbegriff des Patentanspruchs 1 angegebenen Gelenkwelle durch die Merkmale des kennzeichnenden Teils des Patentanspruchs 1.

Während für Gelenkwellen bisher längsnahtgeschweißte Stahlrohre verwendet wurden, sieht die Erfindung vor, die Gelenkwellen für Kraftfahrzeuge durch ein längsnahtgeschweißtes Rohr zu bilden, welches aus einer Aluminiumlegierung besteht, wobei die Aluminiumlegierung durch eine naturharte Legierung gebildet ist. Das Rohr ist ohne Zusatzwerkstoffe längsnahtgeschweißt, und die Wandstärke des Rohres ist größer als 2 mm.

Die Ausbildung der erfindungsgemäßen Gelenkwelle als längsnahtgeschweißtes Rohr aus einer naturharten Aluminiumlegierung ist von besonderem Vorteil. Neben der im Vergleich zu Stahlrohren erzielbaren Gewichtsersparnis sind insbesondere die mit längsnahtgeschweißten Aluminiumrohren erzielbaren Genauigkeiten und engen Toleranzen zu erwähnen, die sich zudem im Vergleich zu bisher bekannten Gelenkwellen kostengünstig und wirtschaftlich herstellen lassen.

Der Schritt, die Gelenkwellen erfindungsgemäß als längsnahtgeschweißtes Rohr aus einer naturharten Aluminiumlegierung auszubilden, ist als überraschende Maßnahme anzusehen, da dem Fachmann bekannt ist, daß naturharte Aluminiumlegierungen bei höheren Temperaturen - etwa ab 60° C - zu Korrosionen neigen. Solche hohen Temperaturwerte sind aber bei Gelenkwellen durchaus gängig. Sie entstehen im Betrieb durch die Wärme des Motors des Kraftfahrzeuges und auch durch die Wärme des Getriebes.

Der Nachteil der erwähnten Korrosionen besteht darin, daß darunter die Dauerfestigkeit des Materials erheblich leiden kann, was bei Gelenkwellen nicht zulässig ist.

In Versuchen konnte allerdings festgestellt werden, daß bei den erfindungsgemäßen längsnahtgeschweißten Aluminiumrohren die Gefahr einer verringerten Dauerfestigkeit nicht gegeben ist. Somit wurde durch die erfindungsgemäßen Maßnahmen in überraschender Weise ein Vorurteil der Fachwelt überwunden.

Außerdem bestanden bisher beim Fachmann unter dem Gesichtspunkt der Schweißnahtsicherheit bei längsnahtgeschweißten Aluminiumrohren auch erhebliche Bedenken, bei den dynamischen Belastungen, denen Gelenkwellen ausgesetzt sind, längsnahtgeschweißte Aluminiumrohre zu verwenden. Die Schweißnahtsicherheit ist nämlich ein bedeutender Faktor im Hinblick auf die bei dynamisch stark belasteten Teilen zu fordernde mechanische Festigkeit. Deshalb ist beim Stand der Technik der Einsatz von längsnahtgeschweißten Aluminiumrohren auch vorzugsweise lediglich bei statisch belasteten Bauteilen erfolgt. Bei dynamisch belasteten Teilen sind zwar auch schon Aluminiumrohre eingesetzt worden, dabei handelte es sich aber stets um stranggepreßte Aluminiumrohre.

Bei der Erfindung ist es im Hinblick auf die Gelenkwellen von Vorteil, daß ohne Zusatzwerkstoffe längsnahtgeschweißte Rohre hinsichtlich der Wandstärke wesentlich genauer und mit kleineren Toleranzen behaftet sind, als stranggepreßte Rohre. Auch die Gewichtsschwankungen der längsnahtgeschweißten Rohre sind über ihre Länge gesehen deutlich geringer als stranggepreßte Rohre aus Aluminium, was sich vorteilhaft auf die dynamischen Eigenschaften auswirkt.

Als besonders zweckmäßig hat sich bei der Erfindung erwiesen, daß die längsnahtgeschweißten Rohre aus einer AlMgMn-Legierung besteht. Auf dieser Basis gemäß der Erfindung hergestellte Gelenkwellen konnten in Versuchen allen Anforderungen in optimaler Weise entsprechen.

Eine weitere zweckmäßige Ausgestaltung der Erfindung besteht darin, daß die Nahtüberhöhung der Schweißnaht zwischen - 0,1 und + 0,1 mm liegt. In an sich bekannter Weise wird bei der Herstellung der erfindungsgemäßen Gelenkwellen das Hochfrequenzinduktions-Schweißen (HFI-Schweißen) angewendet, wobei keine Zusatzwerkstoffe für den Schweißvorgang benötigt werden. Gleichwohl bildet sich dabei eine Schweißnaht aus, die eine Verdickung der Wandstärke des Aluminiumrohres darstellt. Diese als Nahtüberhöhung bezeichnete Verdickung der Schweißnaht wird anschließend in der angegebenen Toleranzbreite von - 0,1 und + 0,1 mm entfernt, d.h., im Bereich der Schweißnaht wird noch eine Verdickung von + 0,1 mm zugelassen, und andererseits ist es auch noch zulässig, wenn bei der Entfernung der Nahtüberhöhung zuviel Material abgetragen wird und sich dabei eine Verringerung der Wandstärke des Rohres von 0,1 mm ergibt.

## Patentansprüche

1. Gelenkwelle für Kraftfahrzeuge, wobei die Gelenkwelle als Rohr ausgebildet ist und aus Aluminium besteht, **dadurch gekennzeichnet**, daß die Gelenkwelle ein längsnahtgeschweißtes Rohr ist, welches aus einer Aluminiumlegierung besteht, daß die Aluminiumlegierung durch eine naturharte Legierung gebildet ist, daß das Rohr ohne Zusatzwerkstoffe längsnahtgeschweißt ist, und daß die Wandstärke des Rohres größer als 2 mm ist.

2. Gelenkwelle nach Anspruch 1, **dadurch gekennzeichnet,** daß das längsnahtgeschweißte Rohr aus einer AlMgMn-Legierung besteht.

3. Gelenkwelle nach Anspruch 1 und/oder 2, **dadurch gekennzeichnet**, daß die Schweißnaht des Rohres eine Nahtüberhöhung zwischen - 0,1 und + 0,1 mm aufweist.
